# EUROPEAN PATENT SPECIFICATION

(11) **EP 3 183 893 B1**
(45) Date of publication and mention of the grant of the patent: **08.05.2019**
(21) Application number: 14900123.2
(22) Date of filing: 19.08.2014
(51) Int. Cl.: H04W 4/60, H04W 36/14, H04W 8/18

(54) **TOOLKIT HANDLING ON MULTI-APPLICATION INTEGRATED CIRCUIT CARDS WITH TWO OR MORE CARD APPLICATIONS ACTIVE SIMULTANEOUSLY**
WERKZEUGSATZHANDHABUNG AUF INTEGRIERTEN STECKKARTEN FÜR MEHRERE ANWENDUNGEN MIT ZWEI ODER MEHR GLEICHZEITIG AKTIVEN KARTENANWENDUNGEN
PRISE EN CHARGE DE BOÎTE À OUTILS SUR CARTES À CIRCUITS INTÉGRÉS MULTIAPPLICATIONS COMPORTANT DEUX APPLICATIONS DE CARTES OU PLUS ACTIVES SIMULTANÉMENT

(43) Date of publication of application: 28.06.2017
(73) Proprietor: Qualcomm Incorporated, San Diego, CA 92121-1714 (US)
(72) Inventor: REDDEM, Venkata Konda Reddy, San Diego, California 92121-1714 (US); ZHU, Xiaomin, San Diego, California 92121-1714 (US); BERIONNE, Michele, San Diego, California 92121-1714 (US); SUDABATTULA, Samatha, San Diego, California 92121-1714 (US); RUVALCABA, Jose Alfredo, San Diego, California 92121-1714 (US); XU, Lirong, Beijing 100020 (CN)
(74) Representative: Dunlop, Hugh Christopher
(86) International application number: PCT/CN2014/084692
(87) International publication number: WO 2016/026079

(56) References cited:
- EP-A1- 2 757 835
- CA-A1- 2 476 914
- CN-A- 1 904 923
- CN-A- 101 083 806
- US-A1- 2005 277 432
- "3rd Generation Partnership Project (3GPP); Technical Specification Group (TSG) Terminals; UICC Physical and Logical Characteristics; 3GPP 31.101", 3GPP DRAFT; T3-99164, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. T WG3, no. Miami; 19990614 - 19990616 10 June 1999 (1999-06-10), XP050863237, Retrieved from the Internet: URL:http://www.3gpp.org/ftp/tsg_t/WG3_USIM /TSGT3_06/tdocs/ [retrieved on 1999-06-10]
- 3GPP DRAFT; T3-000386, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. San Diego, USA; 20000816 - 20000818 25 August 2000 (2000-08-25), XP050862145, Retrieved from the Internet: URL:http://www.3gpp.org/ftp/tsg_t/WG3_USIM /TSGT3_00_old_meetings/TSGT3_15/docs/ [retrieved on 2000-08-25]

## Description

### BACKGROUND

Some Subscriber Identity Module (SIM) Toolkit proactive commands are dependent on the technology. These commands/responses will be different for 3GPP2 and 3GPP technologies, and some of these commands are not supported in 3GPP2 technologies. In order to support multiple modes on mobile communication devices, some 2G integrated circuit cards (ICCs), i.e., ICCs with the capability of latching on multiple technologies, for example 3GPP and 3GPP2, have both a Removable User Interface Module (RUIM) directory file (DF) for executing SIM Toolkit (STK) commands when connected to a network using Code Division Multiple Access (CDMA) radio access technology (RAT) and a SIM DF for executing commands when connected to a network using Global System for Mobile communications (GSM) RAT. When the ICC sends a proactive command for the CDMA RAT while the mobile communication device is camped on a GSM network, or vice-versa, the mobile communication device may not understand the command.

Document EP 2 757 835 A1 discloses a system for automatic SIM card selection, the GSM SIM card comprises SIM application toolkit (SAT) commands, the USIM card comprises USIM Application Toolkit (USAT) commands. Camping on a first PLMN using a first RAT and camping on the second PLMN using the second RAT.

### SUMMARY

Apparatuses and methods for enabling proper SIM Toolkit application behavior for a multi-DF integrated circuit card are provided. The invention is defined by the independent claims. Further embodiments are defined by the dependent claims.

According to various embodiments there is provided a method for managing SIM Toolkit (STK) application behavior for a multi-DF integrated circuit card (multi-DF ICC). The method may include: obtaining radio access technology (RAT) information for a RAT on which a mobile communication device is camped; and selecting a directory file (DF) in the multi-DF ICC corresponding to the RAT on which the mobile communication device is camped.

According to various embodiments there is provided a mobile communication device. The mobile communication device may include: an input device configured to input a SIM Toolkit (STK) command; and a control unit.

The control unit may be configured to: obtain radio access technology (RAT) information for a RAT on which a mobile communication device is camped; and cause a multi-directory file (DF) integrated circuit card (multi-DF ICC) to select a DF corresponding to the RAT on which the mobile communication device is camped.

According to various embodiments there is provided a method for performing a SIM Toolkit (STK) command. The method may include: displaying an STK menu; selecting an STK command from the STK menu; obtaining radio access technology (RAT) information for a RAT on which a mobile communication device is camped; causing a multi-directory file (DF) integrated circuit card (multi-DF ICC) to select a DF corresponding to the RAT on which the mobile communication device is camped; and executing the STK command using the selected DF.

According to various embodiments there is provided a mobile communication device. The mobile communication device may include: a display device configured to display a SIM Toolkit (STK) menu; an input device configured to permit a user to select an STK command from the STK menu; and a control unit.

The control unit may be configured to: obtain radio access technology (RAT) information for a RAT on which the mobile communication device is camped; and cause a multi-directory file (DF) integrated circuit card (multi-DF ICC) to select a DF corresponding to the RAT on which the mobile communication device is camped.

Other features and advantages of the present inventive concept should be apparent from the following description which illustrates by way of example aspects of the present inventive concept.

### BRIEF DESCRIPTION OF THE DRAWINGS

Aspects and features of the present inventive concept will be more apparent by describing example embodiments with reference to the accompanying drawings, in which:
FIG. 1 is a block diagram illustrating a mobile communication device according to various embodiments;
FIG. 2 is a sequence diagram according to various embodiments;
FIG. 3 is a flowchart of a method according to various embodiments; and
FIG. 4 is a flowchart of a method according to various embodiments.

### DETAILED DESCRIPTION

While certain embodiments are described, these embodiments are presented by way of example only, and are not intended to limit the scope of protection. The apparatuses, methods, and systems described herein may be embodied in a variety of other forms. Furthermore, various omissions, substitutions, and changes in the form of the example methods and systems described herein may be made without departing from the scope of protection.

A multi-DF ICC may have both an RUIM DF for CDMA (i.e., CDMA DF) and a SIM for GSM (i.e., GSM DF), and both of the DFs may be active. A SIM Application Toolkit (STK) may consist of a set of proactive commands programmed into the SIM that define how the SIM should interact directly with the outside world. The STK may initiate commands independently of the mobile communication device and the network. The STK proactive commands may be constructed based on the current DF selected on the card. The SIM Application Toolkit may communicate with both the SIM (GSM DF) and RUIM (CDMA DF).

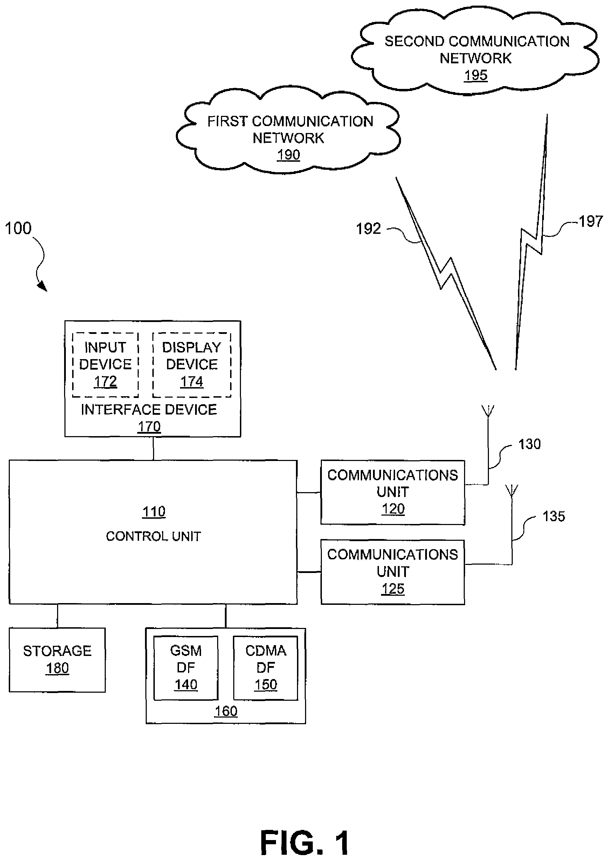

FIG. 1 is a block diagram illustrating a mobile communication device 100 according to various embodiments. As illustrated in FIG. 1, the mobile communication device 100 may include a control unit 110, a first communications unit 120, a second communications unit 125, a first antenna 130, a second antenna 135, a multi-DF ICC 160 having a GSM DF 140 and a CDMA DF 150, a user interface device 170, and a storage 180.

The mobile communication device 100 may be, for example but not limited to, a mobile telephone, smartphone, tablet, computer, etc., capable of communications with one or more wireless networks. One of ordinary skill in the art will appreciate that the mobile communication device 100 may include one or more transceivers or communications units and may interface with one or more antennas without departing from the scope of the present inventive concept.

The first communications unit 120 may include, for example, but not limited to, a first transceiver (not shown). The second communications unit 125 may include, for example, but not limited to, a second transceiver (not shown). In active mode, a transceiver receives and transmits signals. In idle mode, a transceiver receives but does not transmit signals.

The GSM DF 140 may associate the first communications unit 120 with a first subscription (Sub1) 192, for example a GSM subscription, on a first communication network 190 and the CDMA DF 150 may associate the second communications unit 125 with a second subscription (Sub2) 197, for example a CDMA subscription, on a second communication network 195. The multi-DF ICC 160 may be configured to incorporate the GSM DF 140 and the CDMA DF 150. In active mode, a communications unit receives and transmits signals. In idle mode, a communications unit receives but does not transmit signals.

For convenience, throughout this disclosure Sub1 is associated with the first communications unit 120 and Sub2 is associated with the second communications unit 125. One of ordinary skill in the art will appreciate that either subscription may be associated with either communications unit without departing from the scope of the present inventive concept.

The first communication network 190 and the second communication network 195 may be operated by the same or different service providers, and may support different radio access technologies (RATs), for example, but not limited to, CDMA and GSM.

The user interface device 170 may include an input device 172, for example, but not limited to a keyboard, touch panel, or other human interface device, and a display device 174, for example, but not limited to, a liquid crystal display (LCD), light emitting diode (LED) display, or other video display. One of ordinary skill in the art will appreciate that other input and display devices may be used without departing from the scope of the present inventive concept.

The control unit 110 may be configured to control overall operation of the mobile communication device 100 including control of the first and second communications units 120, 125, the user interface device 170, and the storage 180. The control unit 110 may be a programmable device, for example, but not limited to, a microprocessor or microcontroller.

The storage 180 may be configured to store application programs necessary for operation of the mobile communication device 100 that are executed by the control unit 110, as well as application data and user data.

During power up of the mobile communication device 100, the multi-DF ICC 160 may request and receive current RAT information from the mobile communication device 100. The control unit 110 may cause the multi-DF ICC 160 to select a DF corresponding to the RAT on which the mobile communication device 100 is camped.

Various embodiments enable proper STK application behavior for multi-DF ICCs (e.g., multi-DF ICC 160) that support multiple RATs, for example, but not limited to, a CDMA DF 150 that supports CDMA and a GSM DF 150 that supports GSM.

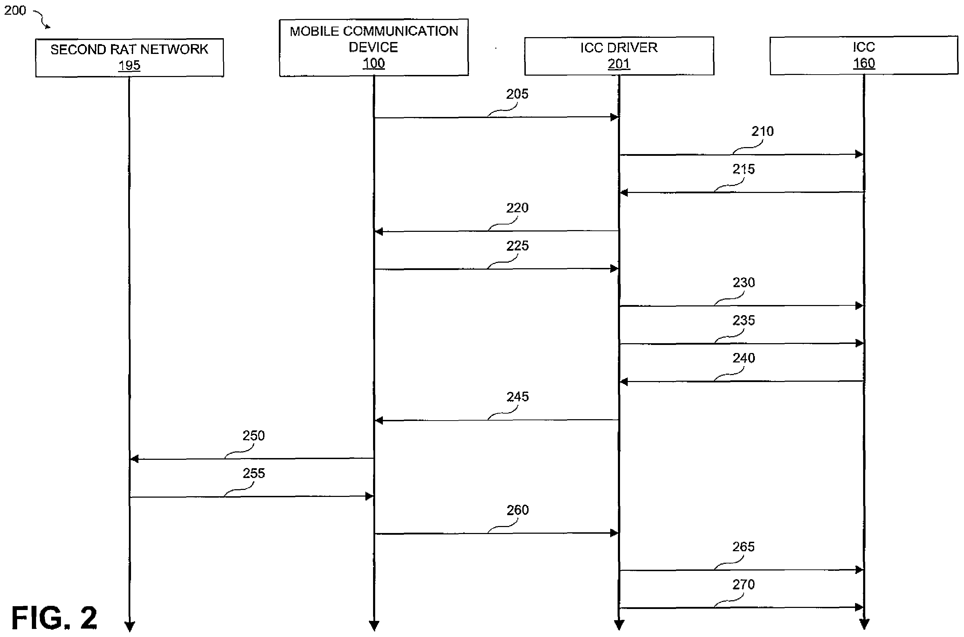

FIG. 2 is a sequence diagram 200 according to various embodiments. Referring to FIGS. 1 and 2, the mobile communication device (e.g., mobile communication device 100) may have powered up on a first network (e.g., the first communication network 190) that supports a first RAT (e.g., GSM), but the mobile communication device 100 may subsequently be camped on a second network (e.g., the second communication network 195) that supports a second RAT (e.g., CDMA).

Since the mobile communication device 100 powered up on a GSM communication network, the mobile communication device 100 may select (205), via the ICC drivers, the GSM DF 140 on the multi-DF ICC 160 to execute commands (210). The multi-DF ICC 160 may issue a proactive command, for example a Display text proactive command, in GSM format (215) that is communicated to the mobile communication device 100 by the ICC driver 201 (220). The mobile communication device 100 may process the command, for example the Display text command, and after processing the command may send a terminal response (TR) to the ICC driver 201 (225). During the processing of a Display text proactive command, the mobile communication device 100 may camp on a CDMA communication network (second RAT network 202). The TR may trigger a SendSMS proactive command by the multi-DF ICC 160. However, since the currently selected DF on the multi-DF ICC 160 is the GSM DF 140 but the mobile communication device 100 is camped on a CDMA communication network, the CDMA DF 150 may be selected (230) before the TR to the Display text proactive command is transmitted from the ICC driver 201 to the multi-DF ICC 160 (235).

The multi-DF ICC 160 may then send the SendSMS request to the ICC driver 201 in CDMA format using the CDMA DF 150 (240). The ICC driver 201 may send the SMS request to the mobile communication device 100 (245), and the mobile communication device 100 may send the SMS request to the CDMA communication network 202 (250), which understands the SMS request. Success responses may be returned from the CDMA communication network 202 to the mobile communication device 100 (255) and from the mobile communication device 100 to the ICC driver 201 (260). Prior to transmitting the success response to the multi-DF ICC 160, the CDMA DF 150 is selected (265) since the response is in CDMA format, and the success response is transmitted to the multi-DF ICC 160 (270).

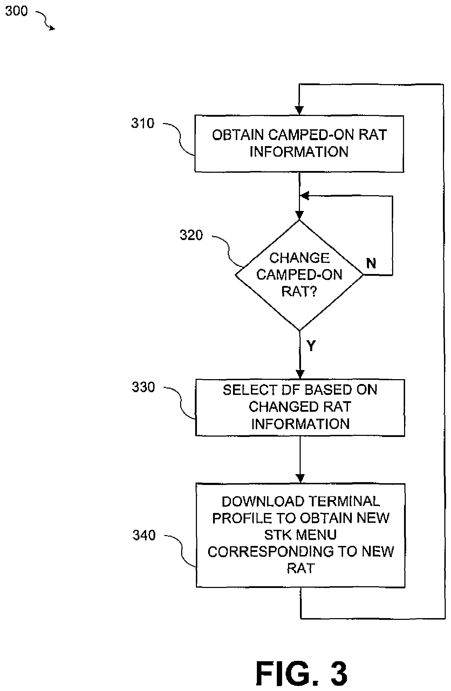

FIG. 3 is a flowchart of a method 300 according to various embodiments. Referring to FIGS. 1-3, at power up the control unit 110 may cause the mobile communication device 100 to perform a terminal profile download to the multi-DF ICC 160 including information about the RAT which the mobile communication device 100 is camped on (310). Alternatively, RAT information may be obtained from user settings or the RAT may be selected based on a last successful RAT communication.

The multi-DF ICC 160 may contain a plurality of DFs corresponding to a plurality of RATs. For example, if the mobile communication device 100 is camped on a GSM communication network, the multi-DF ICC 160 may be caused to select the GSM DF 140, and if the mobile communication device 100 is camped on a CDMA communication network the multi-DF ICC 160 may be caused to select the CDMA DF 150. STK commands may then be issued using the appropriate DF for the camped on RAT. If the mobile communication device 100 remains camped on the communication network, no change of RAT occurs (320-N).

Thereafter, if the RAT that the mobile communication device 100 is camped on changes (320-Y), for example, the mobile communication device 100 moves from an area covered by a GSM communication network to an area covered by a CDMA communication network, or vice-versa, the control unit 110 may cause the multi-DF ICC 160 to select the appropriate DF for the RAT that the mobile communication device 100 is camped on (330) and may cause the mobile communication device 100 to perform a terminal profile download to obtain a new STK setup menu corresponding to the changed RAT from the multi-DF ICC 160 (340). STK commands may then be issued using the appropriate DF for the camped on RAT.

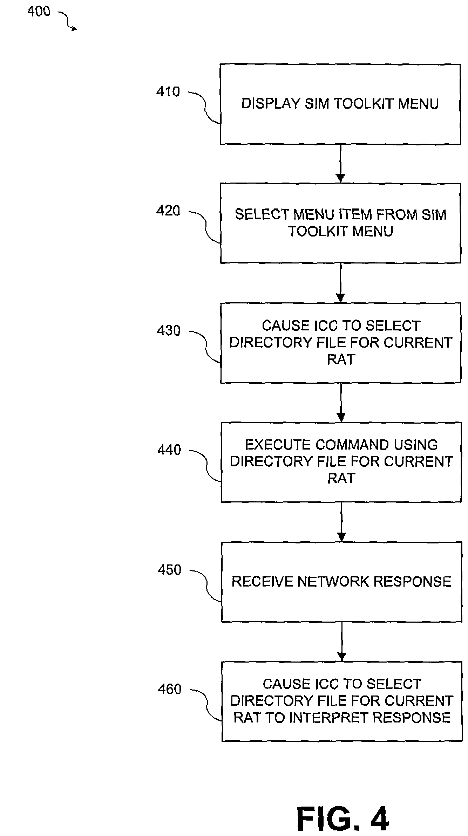

FIG. 4 is a flowchart of a method 400 according to various embodiments. Referring to FIGS. 1-4, the control unit 110 may cause an STK menu to be displayed on the display device 174 of the user interface device 170 (410). An STK menu item may be selected from the STK menu via the input device 172 (420).

The multi-DF ICC 160 may contain a plurality of DFs corresponding to a plurality of RATs. The control unit 110 may cause the multi-DF ICC 160 to select the DF for the RAT the mobile communication device 100 is camped on based on the current RAT information (430) and execute the STK command using the DF for the current RAT (440). The mobile communication device 100 may receive a response to the STK command from the network (450). Prior to transmitting the network response to the multi-DF ICC 160 may cause the multi-DF ICC 160 to select the DF for the RAT the mobile communication device 100 is camped on based on the current RAT information to interpret the network response (460).

Thus, according to various embodiments, proper STK application behavior is provided by selecting the DF (e.g., CDMA DF 150 for CDMA or GSM DF 140 for GSM) based on the RAT (e.g., CDMA or GSM) that the mobile communication device 100 is camped on before triggering STK commands to the multi-DF ICC 160.

The accompanying claims and their equivalents are intended to cover such forms or modifications as would fall within the scope and spirit of the protection. For example, the example apparatuses, methods, and systems disclosed herein can be applied to multi-SIM wireless devices subscribing to multiple communication networks and/or communication technologies. The various components illustrated in the figures may be implemented as, for example, but not limited to, software and/or firmware on a processor, ASIC/FPGA/DSP, or dedicated hardware. Also, the features and attributes of the specific example embodiments disclosed above may be combined in different ways to form additional embodiments, all of which fall within the scope of the present disclosure.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an," or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of receiver devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored as one or more instructions or code on a non-transitory computer-readable storage medium or non-transitory processor-readable storage medium. The steps of a method or algorithm disclosed herein may be embodied in processor-executable instructions that may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable storage media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

Although the present disclosure provides certain example embodiments and applications, other embodiments that are apparent to those of ordinary skill in the art, including embodiments which do not provide all of the features and advantages set forth herein, are also within the scope of this disclosure. Accordingly, the scope of the present disclosure is intended to be defined only by reference to the appended claims.

## Claims

1. A method for managing SIM Toolkit, STK, application behavior for a multi-directory file, DF, integrated circuit card, multi-DF ICC, the method comprising:
obtaining (310) radio access technology, RAT, information for a first RAT on which a mobile communication device (100) is camped;
selecting (330) a first DF in the multi-DF ICC corresponding to the first RAT on which the mobile communication device (100) is camped;
issuing an STK command to the mobile communication device (100) by the multi-DF ICC in a format of the DF corresponding to the first RAT;
camping on a second RAT (195) during processing of the command;
selecting a second DF in the multi-DF ICC corresponding to the second RAT (195) on which the mobile communication device (100) is camped; and
completing the processing of the STK command in a format of the second DF in the multi-DF ICC corresponding to the second RAT (195).

2. The method of claim 1,
wherein the multi-DF ICC comprises a plurality of DFs; and
wherein the selecting a DF comprises selecting one of the plurality of DFs in the multi-DF ICC that corresponds to a RAT on which the mobile communication device (100) is camped.

3. The method of claim 2, wherein the selecting a DF comprises:
selecting a Code Division Multiple Access, CDMA, DF if the RAT on which the mobile communication device (100) is camped is CDMA; and
selecting a Global System for Mobile communications, GSM, DF if the RAT on which the mobile communication device (100) is camped is GSM.

4. The method of claim 2, wherein the selecting a DF comprises:
selecting a first DF if the RAT on which the mobile communication device (100) is camped is a first network; and
selecting a second DF if the RAT on which the mobile communication device (100) is camped is a second network;
wherein the first DF is different from the second DF, and the first network is a different technology from that of the second network.

5. The method of claim 1, wherein the multi-DF ICC obtains an STK menu based on the RAT information.

6. The method of claim 1, wherein the obtaining RAT information comprises determining the RAT information based on a last successful RAT communication or user settings.

7. The method of claim 1, further comprising:
determining whether a RAT on which the mobile communication device (100) is camped has changed;
causing the multi-DF ICC to select a DF corresponding to a new RAT on which the mobile communication device (100) is camped if the RAT has changed; and
performing (340) a terminal profile download to the multi-DF ICC to obtain a new STK menu corresponding to the new RAT information if the RAT has changed.

8. A mobile communication device (100), comprising:
an input device configured to input a SIM Toolkit, STK, command; and
a control unit (110) configured to:
obtain radio access technology, RAT, information for a first RAT on which a mobile communication device (100) is camped;
cause a multi-directory file, DF, integrated circuit card, multi-DF ICC, to select a first DF corresponding to the first RAT on which the mobile communication device (100) is camped;
receive an STK command to the mobile communication device (100) issued by the multi-DF ICC in a format of the DF corresponding to the first RAT;
cause the mobile communication device (100) to camp on a second RAT (195) during processing of the command;
cause the multi-DF ICC to select a second DF in the multi-DF ICC corresponding to the second RAT (195) on which the mobile communication device (100) is camped; and
complete the processing of the STK command in a format of the second DF in the multi-DF ICC corresponding to the second RAT (195).

9. The mobile communication device of claim 8,
wherein the multi-DF ICC comprises a plurality of DFs, and
wherein the control unit (110) is configured to cause the multi-DF ICC to select one of the plurality of DFs in the multi-DF ICC that corresponds to the a RAT on which the mobile communication device (100) is camped.

10. The mobile communication device of claim 9, wherein the control unit (110) is configured to cause the multi-DF ICC to:
select a Code Division Multiple Access, CDMA, DF if the RAT on which the mobile communication device (100) is camped is CDMA; and
select a Global System for Mobile communications, GSM, DF if the RAT on which the mobile communication device (100) is camped is GSM; or
select a first DF if the RAT on which the mobile communication device (100) is camped is a first network; and
select a second DF if the RAT on which the mobile communication device (100) is camped is a second network;
wherein the first DF is different from the second DF, and the first network is a different technology from that of the second network.

11. The mobile communication device of claim 8, wherein the control unit (110) is configured to:
cause the multi-DF ICC to obtain an STK menu based on the RAT information; or
determine the RAT information based on a last successful RAT communication; or
determine the RAT information based on user settings.

12. The mobile communication device of claim 8, wherein the control unit (110) is configured to:
determine whether the a RAT on which the mobile communication device (100) is camped changed;
cause the multi-DF ICC to select a DF corresponding to the a new RAT on which the mobile communication device (100) is camped if the RAT has changed; and
perform a terminal profile download to the multi-DF ICC to obtain a new STK menu corresponding to the new RAT information if the RAT changed; and
cause the multi-DF ICC to select a DF corresponding to the new RAT on which the mobile communication device (100) is camped.

13. A method for performing a SIM Toolkit, STK, command, the method comprising:
displaying (410) an STK menu;
selecting (420) an STK menu item from the STK menu;
obtaining radio access technology, RAT, information for a first RAT on which a mobile communication device (100) is camped;
causing (430) a multi-directory file, DF, integrated circuit card, multi-DF ICC, to select a DF corresponding to the first RAT on which the mobile communication device (100) is camped;
issuing (440) an STK command to the mobile communication device (100) by the multi-DF ICC in a format of the DF corresponding to the first RAT;
camping on a second RAT (195) during processing of the command;
selecting a second DF in the multi-DF ICC corresponding to the second RAT (195) on which the mobile communication device (100) is camped; and
completing the processing of the STK command in a format of the second DF in the multi-DF ICC corresponding to the second RAT (195).

14. The method of claim 13, further comprising:
receiving (450) a network response to the STK command; and
causing (460) the multi-DF ICC to select the DF corresponding to a RAT on which the mobile communication device (100) is camped to interpret the network response.

15. The method of claim 13, wherein the causing a multi-DF ICC to select a DF comprises:
causing the multi-DF ICC to select a Code Division Multiple Access, CDMA, DF if the RAT on which the mobile communication device (100) is camped is CDMA; and
causing the multi-DF ICC to select a Global System for Mobile communications (GSM) DF if the RAT on which the mobile communication device (100) is camped is GSM; or
causing the multi-DF ICC to select a first DF if the RAT on which the mobile communication device (100) is camped is a first network; and
causing the multi-DF ICC to select a second DF if the RAT on which the mobile communication device (100) is camped is a second network;
wherein the first DF is different from the second DF, and the first network is a different technology from that of the second network.

## Patentansprüche

1. Ein Verfahren zum Verwalten eines STK-Anwendungsverhaltens (STK = SIM Toolkit) für eine Multi-DF-ICC (DF = directory file bzw. Verzeichnisdatei, ICC = integrated circuit card bzw. Karte mit integriertem Schaltkreis), wobei das Verfahren Folgendes aufweist:
Erlangen (310) von Funkzugriffstechnologie- bzw. RAT-Information (RAT = radio access technology) für eine erste RAT, in welche eine Mobilkommunikationseinrichtung (100) eingebucht ist (camped);
Auswählen (330) einer ersten DF in der Multi-DF-ICC entsprechend einer ersten RAT, in die die Mobilkommunikationseinrichtung (100) eingebucht ist;
Ausgeben eines STK-Befehls an die Mobilkommunikationseinrichtung (100) durch die Multi-DF-ICC in einem Format der DF entsprechend der ersten RAT;
Einbuchen in eine zweite RAT (195) während der Verarbeitung des Befehls;
Auswählen einer zweiten DF in der Multi-DF-ICC entsprechend einer zweiten RAT (195), in die die Mobilkommunikationseinrichtung (100) eingebucht ist; und
Abschließen der Verarbeitung des STK-Befehls in einem Format der zweiten DF in der Multi-DF-ICC entsprechend der zweiten RAT (195).

2. Verfahren nach Anspruch 1,
wobei die Multi-DF-ICC eine Vielzahl von DFs aufweist; und
wobei das Auswählen einer DF Auswählen einer der Vielzahl von DFs in der Multi-DF-ICC aufweist, die einer RAT entspricht, in die die Mobilkommunikationseinrichtung (100) eingebucht ist.

3. Verfahren nach Anspruch 2, wobei das Auswählen einer DF Folgendes aufweist:
Auswählen einer CDMA-DF (CDMA = Code Division Multiple Access bzw. Codemultiplex-Vielfachzugriff), wenn die RAT, in die die Mobilkommunikationseinrichtung (100) eingebucht ist, CDMA ist; und
Auswählen einer GSM-DF (GSM = Global System for Mobile communications), wenn die RAT, in die die Mobilkommunikationseinrichtung (100) eingebucht ist, GSM ist.

4. Verfahren nach Anspruch 2, wobei das Auswählen einer DF Folgendes aufweist:
Auswählen einer ersten DF, wenn die RAT, in die die Mobilkommunikationseinrichtung (100) eingebucht ist, ein erstes Netzwerk ist; und
Auswählen einer zweiten DF, wenn die RAT, in die die Mobilkommunikationseinrichtung (100) eingebucht ist, ein zweites Netzwerk ist;
wobei sich die erste DF von der zweiten DF unterscheidet und das erste Netzwerk eine andere Technologie ist als die des zweiten Netzwerks.

5. Verfahren nach Anspruch 1, wobei die Multi-DF-ICC ein STK-Menü basierend auf der RAT-Information erlangt.

6. Verfahren nach Anspruch 1, wobei das Erlangen von RAT-Information Bestimmen der RAT-Information basierend auf einer letzten erfolgreichen RAT-Kommunikation oder Nutzereinstellungen aufweist.

7. Verfahren nach Anspruch 1, das weiter Folgendes aufweist:
Bestimmen, ob sich eine RAT, in die die Mobilkommunikationseinrichtung (100) eingebucht ist, geändert hat;
Veranlassen der Multi-DF-ICC, eine DF entsprechend einer neuen RAT, in die die Mobilkommunikationseinrichtung (100) eingebucht ist, auszuwählen, wenn sich die RAT geändert hat; und
Durchführen (340) eines Endgerätprofil-Downloads auf die Multi-DF-ICC zum Erlangen eines neuen STK-Menüs entsprechend der neuen RAT-Information, wenn sich die RAT geändert hat.

8. Eine Mobilkommunikationseinrichtung (100), die Folgendes aufweist:
eine Eingabeeinrichtung, die konfiguriert ist zum Eingeben eines STK-Befehls (STK = SIM Toolkit); und
eine Steuereinheit (110), die konfiguriert ist zum:
Erlangen von Funkzugriffstechnologie- bzw. RAT-Information (RAT = radio access technology) für eine erste RAT, in welche eine Mobilkommunikationseinrichtung (100) eingebucht ist (camped);
Veranlassen einer Multi-DF-ICC (DF = directory file bzw. Verzeichnisdatei, ICC = integrated circuit card bzw. Karte mit integriertem Schaltkreis) eine erste DF entsprechend der ersten RAT auszuwählen, in die die Mobilkommunikationseinrichtung (100) eingebucht ist;
Empfangen eines STK-Befehls an die Mobilkommunikationseinrichtung (100), der durch die Multi-DF-ICC in einem Format der DF entsprechend der ersten RAT ausgegeben worden ist;
Veranlassen der Mobilkommunikationseinrichtung (100), sich während einer Verarbeitung des Befehls in eine zweiten RAT (195) einzubuchen;
Veranlassen der Multi-DF-ICC, eine zweite DF in der Multi-DF-ICC entsprechend der zweiten RAT (195) auszuwählen, in welche die Mobilkommunikationseinrichtung (100) eingebucht ist; und
Abschließend der Verarbeitung des STK-Befehls in einem Format der zweiten DF in der Multi-DF-ICC entsprechend der zweiten RAT (195).

9. Mobilkommunikationseinrichtung nach Anspruch 8,
wobei die Multi-DF-ICC eine Vielzahl von DFs aufweist, und
wobei die Steuereinheit (110) konfiguriert ist die Multi-DF-ICC zu veranlassen, eine der Vielzahl von DFs in der Multi-DF-ICC auszuwählen, die der RAT entspricht, in die die Mobilkommunikationseinrichtung (100) eingebucht ist.

10. Mobilkommunikationseinrichtung nach Anspruch 9, wobei die Steuereinheit (110) konfiguriert ist die Multi-DF-ICC zu veranlassen zum:
Auswählen einer CDMA-DF (CDMA = Code Division Multiple Access bzw. Codemultiplex-Vielfachzugriff), wenn die RAT, in die die Mobilkommunikationseinrichtung (100) eingebucht ist, CDMA ist; und
Auswählen einer GSM-DF (GSM = Global System for Mobile communications), wenn die RAT, in die die Mobilkommunikationseinrichtung (100) eingebucht ist, GSM ist; oder
Auswählen einer ersten DF, wenn die RAT, in die die Mobilkommunikationseinrichtung (100) eingebucht ist, ein erstes Netzwerk ist; und
Auswählen einer zweiten DF, wenn die RAT, in die die Mobilkommunikationseinrichtung (100) eingebucht ist, ein zweites Netzwerk ist;
wobei sich die erste DF von der zweiten DF unterscheidet und das erste Netzwerk eine andere Technologie als die des zweiten Netzwerks ist.

11. Mobilkommunikationseinrichtung nach Anspruch 8, wobei die Steuereinheit (110) konfiguriert ist zum:
Veranlassen der Multi-DF-ICC zum Erlangen eines STK-Menüs basierend auf der RAT-Information; oder
Bestimmen der RAT-Information basierend auf einer letzten erfolgreichen RAT-Kommunikation; oder
Bestimmen der RAT-Information basierend auf Nutzereinstellungen.

12. Mobilkommunikationseinrichtung nach Anspruch 8, wobei die Steuereinheit (110) konfiguriert ist zum:
Bestimmen, ob sich die RAT, in die die Mobilkommunikationseinrichtung (100) eingebucht ist, geändert hat;
Veranlassen der Multi-DF-ICC eine DF entsprechend der neuen RAT auszuwählen, in die die Mobilkommunikationseinrichtung (100) eingebucht ist, wenn sich die RAT geändert hat; und
Durchführen eines Endgerätprofil-Downloads auf die Multi-DF-ICC zum Erlangen eines neuen STK-Menüs entsprechend der neuen RAT-Information, wenn sich die RAT geändert hat; und
Veranlassen der Multi-DF-ICC eine DF auszuwählen entsprechend der neuen RAT, in die die Mobilkommunikationseinrichtung (100) eingebucht ist.

13. Ein Verfahren zum Durchführen eines STK-Befehls (STK = SIM Toolkit), wobei das Verfahren Folgendes aufweist:
Anzeigen (410) eines STK-Menüs;
Auswählen (420) eines STK-Menüpunktes aus dem STK-Menü;
Erlangen von Funkzugriffstechnologie- bzw. RAT-Information (RAT = radio access technology) für eine erste RAT, in die die Mobilkommunikationseinrichtung (100) eingebucht ist (camped);
Veranlassen (430) einer Multi-DF-ICC (DF = directory file bzw. Verzeichnisdatei, ICC = integrated circuit card bzw. Karte mit integriertem Schaltkreis) eine erste DF entsprechend der ersten RAT auszuwählen, in welche die Mobilkommunikationseinrichtung (100) eingebucht ist;
Ausgeben (440) eines STK-Befehls an die Mobilkommunikationseinrichtung (100) durch die Multi-DF-ICC in einem Format der DF entsprechend der ersten RAT;
Einbuchen in eine zweiten RAT (195) während der Verarbeitung des Befehls;
Auswählen einer zweiten DF in der Multi-DF-ICC entsprechend der zweiten RAT (195), in die die Mobilkommunikationseinrichtung (100) eingebucht ist; und
Abschließen der Verarbeitung des STK-Befehls in einem Format der zweiten DF in der Multi-DF-ICC entsprechend der zweiten RAT (195).

14. Verfahren nach Anspruch 13, das weiter Folgendes aufweist:
Empfangen (450) einer Netzwerkantwort auf den STK-Befehl; und
Veranlassen (460) der Multi-DF-ICC, die DF entsprechend einer RAT, in die die Mobilkommunikationseinrichtung (100) eingebucht ist, auszuwählen, um die Netzwerkantwort zu interpretieren.

15. Verfahren nach Anspruch 13, wobei das Veranlassen einer Multi-DF-ICC zum Auswählen einer DF Folgendes aufweist:
Veranlassen der Multi-DF-ICC eine CDMA-DF (CDMA = Code Division Multiple Access bzw. Codemultiplex-Vielfachzugriff) auszuwählen, wenn die RAT, in die die Mobilkommunikationseinrichtung (100) eingebucht ist, CDMA ist; und
Veranlassen der Multi-DF-ICC eine GSM-DF (GSM = Global System for Mobile communications) auszuwählen, wenn die RAT, in die die Mobilkommunikationseinrichtung (100) eingebucht ist, GSM ist; oder Veranlassen der Multi-DF-ICC eine erste DF auszuwählen, wenn die RAT, in die die Mobilkommunikationseinrichtung (100) eingebucht ist, ein erstes Netzwerk ist; und
Veranlassen der Multi-DF-ICC eine zweite DF auszuwählen, wenn die RAT, in die die Mobilkommunikationseinrichtung (100) eingebucht ist, ein zweites Netzwerk ist;
wobei sich die erste DF von der zweiten DF unterscheidet und das erste Netzwerk eine andere Technologie ist als die des zweiten Netzwerks.

## Revendications

1. Procédé de gestion de comportement d'application de boîte à outils SIM, STK, pour une carte de circuit intégré de fichier à multiples répertoires, DF, ICC à multiples DF, le procédé comprenant :
une obtention (310) d'informations de technologie d'accès radio, RAT, pour une première RAT sur laquelle un dispositif de communication mobile (100) est campé ;
une sélection (330) d'un premier DF dans l'ICC à multiples DF correspondant à la première RAT sur laquelle le dispositif de communication mobile (100) est campé ;
une émission d'une commande STK au dispositif de communication mobile (100) par l'ICC à multiples DF dans un format du DF correspondant à la première RAT ;
un campement sur une seconde RAT (195) pendant un traitement de la commande ;
une sélection d'une seconde DF dans l'ICC à multiples DF correspondant à la seconde RAT (195) sur laquelle le dispositif de communication mobile (100) est campé ; et
une finalisation du traitement de la commande STK dans un format du second DF dans l'ICC à multiples DF correspondant à la seconde RAT (195).

2. Procédé selon la revendication 1,
dans lequel l'ICC à multiples DF comprend une pluralité de DF ; et
dans lequel la sélection d'un DF comprend une sélection d'un de la pluralité de DF dans l'ICC à multiples DF qui correspond à une RAT sur laquelle le dispositif de communication mobile (100) est campé.

3. Procédé selon la revendication 2, dans lequel la sélection d'un DF comprend :
une sélection d'un DF d'accès multiple par répartition de code, CDMA, si la RAT sur laquelle le dispositif de communication mobile (100) est campé est un CDMA ; et
une sélection d'un DF de système mondial de communications mobiles, GSM, si la RAT sur laquelle le dispositif de communication mobile (100) est campé est un GSM.

4. Procédé selon la revendication 2, dans lequel la sélection d'un DF comprend :
une sélection d'un premier DF si la RAT sur laquelle le dispositif de communication mobile (100) est campé est un premier réseau ; et
une sélection d'un second DF si la RAT sur laquelle le dispositif de communication mobile (100) est campé est un second réseau ;
dans lequel le premier DF est différent du second DF, et le premier réseau est une technologie différente de celle du second réseau.

5. Procédé selon la revendication 1, dans lequel l'ICC à multiples DF obtient un menu STK sur la base des informations de RAT.

6. Procédé selon la revendication 1, dans lequel l'obtention d'informations de RAT comprend une détermination des informations de RAT sur la base d'une dernière communication de RAT réussie ou de paramètres d'utilisateur.

7. Procédé selon la revendication 1, comprenant en outre :
une détermination du fait qu'une RAT sur laquelle le dispositif de communication mobile (100) est campé a changé ;
un entraînement de l'ICC à multiples DF à sélectionner un DF correspondant à une nouvelle RAT sur laquelle le dispositif de communication mobile (100) est campé si la RAT a changé ; et
une réalisation (340) d'un téléchargement de profil de terminal sur l'ICC à multiples DF pour obtenir un nouveau menu STK correspondant aux nouvelles informations de RAT si la RAT a changé.

8. Dispositif de communication mobile (100), comprenant :
un dispositif d'entrée configuré pour entrer une commande de boîte à outils SIM, STK ; et
une unité de commande (110) configurée pour :
obtenir des informations de technologie d'accès radio, RAT, pour une première RAT sur laquelle un dispositif de communication mobile (100) est campé ;
entraîner une carte de circuit intégré de fichier à multiples répertoires, DF, ICC à multiples DF, à sélectionner un premier DF correspondant à la première RAT sur laquelle le dispositif de communication mobile (100) est campé ;
recevoir une commande STK sur le dispositif de communication mobile (100) émise par l'ICC à multiples DF dans un format du DF correspondant à la première RAT ;
entraîner le dispositif de communication mobile (100) à camper sur une seconde RAT (195) pendant un traitement de la commande ;
entraîner l'ICC à multiples DF à sélectionner un second DF dans l'ICC à multiples DF correspondant à la seconde RAT (195) sur laquelle le dispositif de communication mobile (100) est campé ; et
finaliser le traitement de la commande STK dans un format du second DF dans l'ICC à multiples DF correspondant à la seconde RAT (195).

9. Dispositif de communication mobile selon la revendication 8,
dans lequel l'ICC à multiples DF comprend une pluralité de DF, et
dans lequel l'unité de commande (110) est configurée pour entraîner l'ICC à multiples DF à sélectionner un de la pluralité de DF dans l'ICC à multiples DF qui correspond à la RAT sur laquelle le dispositif de communication mobile (100) est campé.

10. Dispositif de communication mobile selon la revendication 9, dans lequel l'unité de commande (110) est configurée pour entraîner l'ICC à multiples DF à :
sélectionner un DF d'accès multiple par répartition de code, CDMA, si la RAT sur laquelle le dispositif de communication mobile (100) est campé est un CDMA ; et
sélectionner un DF de système mondial de communications mobiles, GSM, si la RAT sur laquelle le dispositif de communication mobile (100) est campé est un GSM ; ou
sélectionner un premier DF si la RAT sur laquelle le dispositif de communication mobile (100) est campé est un premier réseau ; et
sélectionner un second DF si la RAT sur laquelle le dispositif de communication mobile (100) est campé est un second réseau ;
dans lequel le premier DF est différent du second DF, et le premier réseau est une technologie différente de celle du second réseau.

11. Dispositif de communication mobile selon la revendication 8, dans lequel l'unité de commande (110) est configurée pour :
entraîner l'ICC à multiples DF à obtenir un menu STK sur la base des informations de RAT ; ou
déterminer les informations de RAT sur la base d'une dernière communication de RAT réussie ; ou
déterminer les informations de RAT sur la base de paramètres d'utilisateur.

12. Dispositif de communication mobile selon la revendication 8, dans lequel l'unité de commande (110) est configurée pour :
déterminer le fait que la RAT sur laquelle le dispositif de communication mobile (100) est campé a changé ;
entraîner l'ICC à multiples DF à sélectionner un DF correspondant à la nouvelle RAT sur laquelle le dispositif de communication mobile (100) est campé si la RAT a changé ; et
réaliser un téléchargement de profil de terminal sur l'ICC à multiples DF pour obtenir un nouveau menu STK correspondant aux nouvelles informations de RAT si la RAT a changé ; et
entraîner l'ICC à multiples DF à sélectionner un DF correspondant à la nouvelle RAT sur laquelle le dispositif de communication mobile (100) est campé.

13. Procédé de réalisation d'une commande de boîte à outils SIM, STK, le procédé comprenant :
un affichage (410) d'un menu STK ;
une sélection (420) d'un élément de menu STK à partir du menu STK ;
une obtention d'informations de technologie d'accès radio, RAT, pour une première RAT sur laquelle un dispositif de communication mobile (100) est campé ;
un entraînement (430) d'une carte de circuit intégré de fichier à multiples répertoires, DF, ICC à multiples DF, à sélectionner un DF correspondant à la première RAT sur laquelle le dispositif de communication mobile (100) est campé ;
une émission (440) d'une commande STK au dispositif de communication mobile (100) par l'ICC à multiples DF dans un format du DF correspondant à la première RAT;
un campement sur une seconde RAT (195) pendant un traitement de la commande ;
une sélection d'un second DF dans l'ICC à multiples DF correspondant à la seconde RAT (195) sur laquelle le dispositif de communication mobile (100) est campé ; et
une finalisation du traitement de la commande STK dans un format du second DF dans l'ICC à multiples DF correspondant à la seconde RAT (195).

14. Procédé selon la revendication 13, comprenant en outre :
une réception (450) d'une réponse de réseau à la commande STK ; et
un entraînement (460) de l'ICC à multiples DF à sélectionner le DF correspondant à une RAT sur laquelle le dispositif de communication mobile (100) est campé pour interpréter la réponse de réseau.

15. Procédé selon la revendication 13, dans lequel l'entraînement d'une ICC à multiples DF à sélectionner un DF comprend :
un entraînement de l'ICC à multiples DF à sélectionner un DF d'accès multiple par répartition de code, CDMA, si la RAT sur laquelle le dispositif de communication mobile (100) est campé est un CDMA ; et
un entraînement de l'ICC à multiples DF à sélectionner un DF de système mondial de communications mobiles (GSM) si la RAT sur laquelle le dispositif de communication mobile (100) est campé est un GSM ; ou
un entraînement de l'ICC à multiples DF à sélectionner un premier DF si la RAT sur laquelle le dispositif de communication mobile (100) est campé est un premier réseau ; et
un entraînement de l'ICC à multiples DF à sélectionner un second DF si la RAT sur laquelle le dispositif de communication mobile (100) est campé est un second réseau ; dans lequel le premier DF est différent du second DF, et le premier réseau est une différente technologie de celle du second réseau.
